# EUROPEAN PATENT SPECIFICATION

(11) **EP 2 837 116 B1**
(45) Date of publication and mention of the grant of the patent: **04.07.2018**
(21) Application number: 13717828.1
(22) Date of filing: 10.04.2013
(51) Int. Cl.: H04H 40/18

(54) **RECEIVER**
EMPFÄNGER
RÉCEPTEUR

(30) Priority: 11.04.2012 GB 201206362
(43) Date of publication of application: 18.02.2015
(73) Proprietor: Frontier Silicon Limited, Cambridge Cambridgeshire CB22 3LJ (GB)
(72) Inventor: TANG-RICHARDSON, Mel, Cambridge Cambridgeshire CB22 3LJ (GB); EMERSON, Christopher Michael, Cambridge Cambridgeshire CB22 3LJ (GB)
(74) Representative: Probert, Rhyan Wyn
(86) International application number: PCT/GB2013/050919
(87) International publication number: WO 2013/153380

(56) References cited:
- EP-A2- 1 073 224
- WO-A1-00/57564
- WO-A2-99/57849
- US-A- 5 222 254

## Description

### FIELD OF THE INVENTION

The present invention relates to a receiver for receiving a broadcast signal, and a method of receiving a broadcast signal. In particular, the present invention relate to a receiver and method of receiving broadcast DAB signals.

### BACKGROUND OF THE INVENTION

When receiving broadcast services, such as OFDM broadcast services (for example DAB broadcast services), it is often desirable for the receiver to determine the quality and availability of broadcast services on other frequencies to the one currently being received. For example, this may be useful to enable a receiver to display alternative services to a user, or to enable faster transitions between frequencies when the user desires to tune to an alternative service.

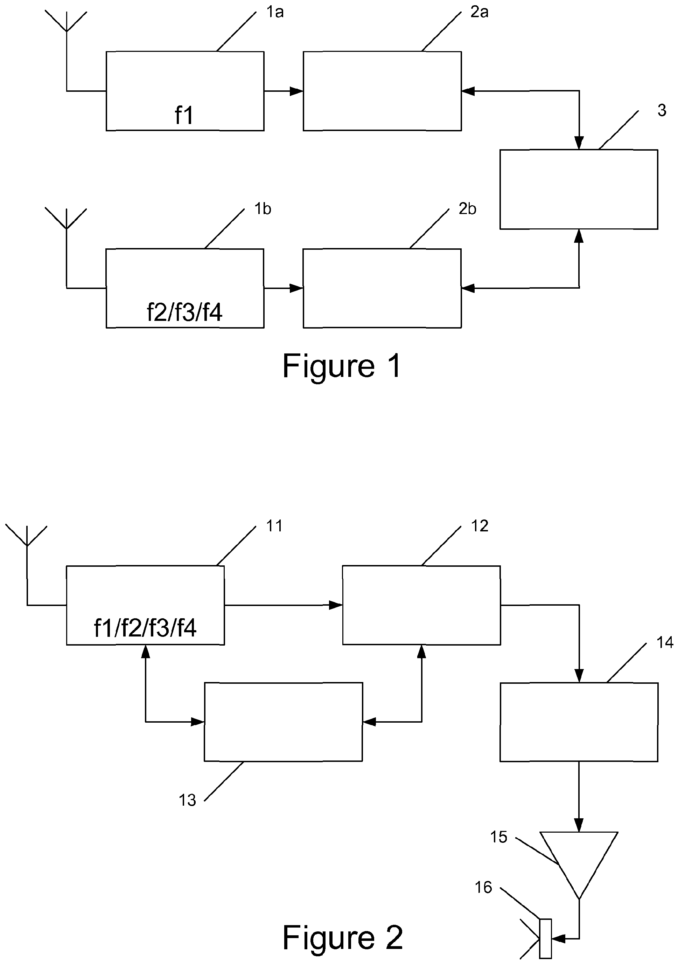

A known solution is to include a two radio tuners in a radio receiver, as shown in Figure 1. A first tuner 1a and demodulator 2a receives and demodulates the broadcast service desired by the user, whilst a second radio tuner 1b tunes to other frequencies to discover alternative broadcast services on the other frequencies. However, this is a costly solution, as there are two tuners and demodulators. WO 00/57564 A1 describes the test receiving of alternative reception radio frequencies, especially in digital video broadcasting. We have appreciated the need for an alternative receiver that may discover alternative broadcast services on other frequencies to the one being received by the user.

### SUMMARY OF THE INVENTION

The invention is defined in independent claims 1 and 7. Advantageously, broadcast signals can be detected on alternative frequencies using only a single tuner using the above-mentioned receiver. This reduces costs, since only a single tuner is required.

In embodiments, the controller is configured to control the turner to tune to a second frequency, detect a second broadcast signal and control the tuner to tune back to the first frequency during the first received frame. This may occur before and/or after receiving the packet of broadcast data corresponding with the first broadcast service. As such, the receiver utilises the structure of the received broadcast signal in order to allow tuning away from the selected frequency, detection of the alternative services and tuning back to the desired frequency.

In embodiments, the controller is configured to detect a second broadcast signal by determining the presence of a second broadcast signal at the second frequency. Furthermore, in some embodiments, the controller is configured to determine a quality metric of the second broadcast signal.

According to the present invention, we also provide a method of detecting broadcast signals, each of the broadcast signals comprising a plurality of frames, each frame comprising a plurality of packets of broadcast data, each packet of broadcast data corresponding with a broadcast service, wherein each of the frames comprises packets of broadcast data from two or more broadcast services, the method comprising the steps of: receiving a first broadcast signal at a first frequency using a tuner coupleable to an antenna; demodulating the first received broadcast signal; decoding a packet of broadcast data corresponding with a first broadcast service from a first received frame in the first received broadcast signal; controlling the tuner to tune to a second frequency corresponding with a second broadcast signal; detecting a second broadcast signal at the second frequency; and controlling the tuner to tune back to the first frequency and receiving, demodulating and decoding a packet of broadcast data corresponding to the first broadcast service from a second received frame in the first broadcast signal.

Advantageously, broadcast signals can be detected on alternative frequencies using only a single tuner using the above-mentioned method. This reduces costs, since only a single tuner is required.

In embodiments, the steps of controlling the turner to tune to a second frequency, detecting a second broadcast signal and controlling the tuner to tune back to the first frequency occurs during the first received frame before and/or after receiving the packet of broadcast data corresponding with the first broadcast service. As such, the method utilises the structure of the received broadcast signal in order to allow tuning away from the selected frequency, detection of the alternative services and tuning back to the desired frequency.

In embodiments, detecting a second broadcast signal comprises determining the presence of a second broadcast signal at the second frequency. Furthermore, detecting a second broadcast signal may comprise determining a quality metric of the second broadcast signal.

Preferably, the first and second received frames are consecutive frames in the broadcast signal. As such, the user listening to or accessing desired broadcast services will not notice in any break in the reception of such services.

In preferred embodiments, the plurality of frames comprise a plurality of DAB frames. However, the receiver and method may also cope with other broadcast standards, so long as the broadcast standards have a frame structure in which packets within the frame are not required for access of a single broadcast service.

In some embodiments, a packet of broadcast data comprises encoded audio data, and wherein the decoder is configured to decode the encoded audio data into an audio stream for outputting through an audio amplifier. Furthermore, a packet of broadcast data may comprise encoded programme data that is decodeable into a programme data stream.

### LIST OF FIGURES

The invention will now be described, by way of example only, and with reference to the accompanying figures, in which:
Figure 1 shows a dual tuner receiver;
Figure 2 shows a single tuner receiver;
Figure 3 shows a DAB frame structure;
Figure 4 shows a DAB frame structure during retuning of the tuner.

### DETAILED DESCRIPTION OF THE PREFERRED EMBODIMENTS

The invention provides an apparatus and method of detecting and assessing the quality of OFDM transmissions (such as DAB) on other frequencies without interruption to a current channel being demodulated with a single RF tuner frontend.

The invention also enables a receiver to detect information about alternative transmissions which can be used to present new services to the user without needing an explicit scan or to enhance service linking performance by evaluating a set of known possible alternative channels also carrying the current broadcast to improve switching times when the quality of the current channel degrades.

In brief, the invention provides a receiver having a single tuner that can be tuned away from a first frequency, from which a first broadcast signal is being received, to a second frequency to detect alternative broadcast signals and tuned back to the first frequency to continue receiving the first broadcast signal without an interruption to the received service. This invention utilises the fact that not all broadcast data packets within a received frame are required to be decoded in order to receive a desired broadcast service. As such, the tuner can be tuned away, detect alternative services and tuned back to the original frequency to continue receiving the first broadcast service without any perceivable break (to the user) in the reception of the first broadcast service.

Figure 2 shows a simplified system diagram for a receiver according to the present invention. A tuner 11 receives broadcast signals from an antenna and passes the signals to a demodulator 12 and decoder 14. A controller 13 is coupled to the tuner and demodulator 13 and can control the tuning frequency of the tuner. If the demodulated and decoded signal comprises an audio component, this audio component is passed to a power amplifier 15 and a loudspeaker 16.

During use, the user selects a broadcast service to access, the controller controls the tuner to select the correct frequency, and the demodulator, decoder, power amplifier and loudspeaker deliver the broadcast service to the user. In the system of the present invention, the controller further controls the tuner to scan other frequencies (f2, f3, and/or f4, for example) whilst the user listens to the broadcast service without any noticeable break in the received broadcast service.

This is achieved by taking advantage of how the received broadcast signal is structured and decoded. In OFDM systems such as DAB it is typically not necessary to demodulate every symbol in a multiplex. A typical DAB receiver, for example, can switch off much of the radio hardware during unnecessary symbols to reduce overall power consumption.

Therefore, the system of the present invention uses the period of receiving unselected broadcast services to tune to an alternative frequency, capture and analyse the signal at the alternative frequency, and retune to the main frequency in time to continue with the main broadcast. By using the same tuner to perform both the demodulation and the scan and in a time interleaved manner there is no need for the expense of a second tuner and demodulator in the system.

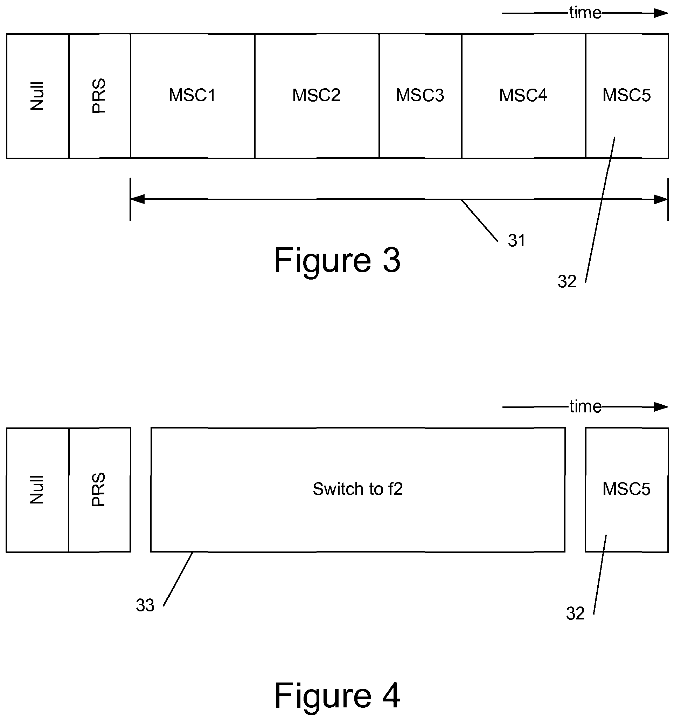

Figure 3 shows the DAB frame structure. It shows a NULL and PRS (Phase Reference Symbol) which the receiver needs to lock to the DAB signal, and a number of MSC (Main Service Channel) packets 31 in the main frame.

Only the NULL, PRS and one of the MSC packets is needed to listen to a particular broadcast service as each MSC packet contains a different service. For example, if the user selects a broadcast service that corresponds with MSC5, the receiver ignores, or throws away, the data relating to MSC1, 2, 3 and 4.

Figure 4 shows a DAB frame structure as seen by the receiver according to the present invention.

Since the other MSC packets (1 to 4) are not required, the controller switches the tuner to another frequency (in this example, f2) in the time when packets relating to MSC1 to 4 are being received. The controller then switched the tuner back to f1 in time to receive MSC5 within the same frame. As such, the user does not experience any perceivable break in the broadcast service.

During the period when the tuner is switched, the tuner, demodulator and controller may analyse the alternative frequency to determine the presence of an OFDM signal. It may also determine a signal-to-noise ratio of a detected OFDM signal. Various techniques may be used, such as correlation or spectral analysis to provide an assessment of the ensemble quality.

In this example, the controller tunes the tuner to one frequency in the same frame. In some embodiments, the controller may tune to more than one different frequency within the same frame, given there is sufficient time to do so within the same frame.

The example shows MSC5 being selected by a user. Of course, other MSCs within the frame may be selected instead. Depending on which MSC is desired, this will determine when and how long the receiver has to scan away from f1 to detect the presence of alternative services. For example, if a broadcast service corresponding with MSC3 is selected, the receiver may tune away before and/or after the MSC3 part of the DAB frame (MSCs1 and 2, and 4 and 5). As another example, if the user selects the broadcast service corresponding with MSC1, the remainder of the MSC frame (MSC2 to 5) may used to scan alternative frequencies.

Some examples of frequencies of interest for DAB signals include 225.648Mhz, 222.064Mhz, 174.928Mhz, and 194.064Mhz. Of course, the present invention is not limited to DAB signals, so other frequencies may be used.

With regards to DAB, there are a number of different DAB modes. In mode 1 the frame is 96ms long, and the symbol length is 1.246ms.

In any mode the CIF timing is 24ms i.e. an MSC occurs on average every 24ms. Typically there will be 2 or 3 Mode 1 MSC symbols needed per CIF (2.4 to 3.7ms) leaving around 20ms to perform the background scan, every 24ms.

The background scan requires 2 whole symbols of mode 1 data which is ∼2.5ms.

Although the present invention has been described hereinabove with reference to specific embodiments, the present invention is not limited to the specific embodiments and modifications will be apparent to a skilled person in the art which lie within the scope of the present invention. Any of the embodiments described hereinabove can be used in any combination.

## Claims

1. A receiver for detecting broadcast signals, each of the broadcast signals comprising a plurality of DAB frames, each frame comprising a plurality of Main Service Channel (MSC) packets of broadcast data, each MSC packet of broadcast data corresponding with a broadcast service, wherein each of the frames comprises MSC packets of broadcast data from two or more broadcast services, the receiver comprising:
a tuner coupleable to an antenna for receiving broadcast signals;
a demodulator coupled to an output of the tuner for demodulating a received broadcast signal into a plurality of received frames;
a decoder coupled to an output of the demodulator for decoding the received plurality of frames; and
a controller coupled to the tuner and demodulator,
wherein the controller is configured to:
control the tuner to receive a first broadcast signal at a first frequency such that the demodulator demodulates the first received broadcast signal and the decoder decodes a MSC packet of broadcast data corresponding with a first broadcast service from a first received frame in the first received broadcast signal;
control the tuner to tune to a second frequency corresponding with a second broadcast signal;
detect a second broadcast signal at the second frequency; and
control the tuner to tune back to the first frequency such that the demodulator demodulates the first received broadcast signal and the decoder decodes a MSC packet of broadcast data corresponding to the first broadcast service from a second received frame in the first broadcast signal, the first and second received frames being consecutive frames in the broadcast signal,
wherein, tuning the tuner to the second frequency, detecting the second broadcast signal and tuning the tuner back to the first frequency occurs during reception of a portion of the frame corresponding with unwanted MSC packets of broadcast data corresponding with unwanted broadcast services, such that there is no interruption to the decoded first broadcast service.

2. A receiver according to claim 1, wherein the controller is configured to control the turner to tune to a second frequency, detect a second broadcast signal and control the tuner to tune back to the first frequency during the first received frame before and/or after receiving the packet of broadcast data corresponding with the first broadcast service.

3. A receiver according to claim 1 or 2, wherein the controller is configured to detect a second broadcast signal by determining the presence of a second broadcast signal at the second frequency.

4. A receiver according to claim 1, 2 or 3, wherein the controller is configured to determine a quality metric of the second broadcast signal.

5. A receiver according to any one of claims 1 to 4, wherein a packet of broadcast data comprises encoded audio data, and wherein the decoder is configured to decode the encoded audio data into an audio stream for outputting through an audio amplifier.

6. A receiver according to any one of claims 1 to 5, wherein a packet of broadcast data comprises encoded programme data that is decodeable into a programme data stream.

7. A method of detecting broadcast signals, each of the broadcast signals comprising a plurality of DAB frames, each frame comprising a plurality of packets of broadcast data, each packet of broadcast data corresponding with a broadcast service, wherein each of the frames comprises packets of broadcast data from two or more broadcast services, the method comprising the steps of:
receiving a first broadcast signal at a first frequency using a tuner coupleable to an antenna;
demodulating the first received broadcast signal;
decoding a packet of broadcast data corresponding with a first broadcast service from a first received frame in the first received broadcast signal;
tuning the tuner to a second frequency corresponding with a second broadcast signal;
detecting a second broadcast signal at the second frequency; and
tuning the tuner back to the first frequency and receiving, demodulating and decoding a packet of broadcast data corresponding to the first broadcast service from a second received frame in the first broadcast signal, the first and second received frames being consecutive frames in the broadcast signal,
wherein, tuning the tuner to the second frequency, detecting the second broadcast signal and tuning the tuner back to the first frequency occurs during reception of a portion of the frame corresponding with unwanted packets of broadcast data corresponding with unwanted broadcast services, such that there is no interruption to the decoded first broadcast service.

8. A method according to claim 7, wherein the steps of controlling the turner to tune to a second frequency, detecting a second broadcast signal and controlling the tuner to tune back to the first frequency occurs during the first received frame before and/or after receiving the packet of broadcast data corresponding with the first broadcast service.

9. A method according to claim 7 or 8, wherein detecting a second broadcast signal comprises determining the presence of a second broadcast signal at the second frequency.

10. A method according to claim 7, 8 or 9, wherein detecting a second broadcast signal comprises determining a quality metric of the second broadcast signal.

11. A method according to any one of claims 7 to 10, wherein a packet of broadcast data comprises encoded audio data that is decodeable into an audio stream for outputting through an audio amplifier.

12. A method according to any one of claims 7 to 11, wherein a packet of broadcast data comprises encoded programme data that is decodeable into a programme data stream.

## Patentansprüche

1. Empfänger zum Empfangen von Rundfunksignalen, wobei jedes der Rundfunksignale eine Vielzahl von DAB-Rahmen umfasst, wobei jeder Rahmen eine Vielzahl von Hauptdienstkanal-(MSC-)Paketen von Rundfunkdaten umfasst, wobei jedes MSC-Paket von Rundfunkdaten einem Rundfunkdienst entspricht, worin jeder der Rahmen MSC-Pakete von Rundfunkdaten aus zwei oder mehr Rundfunkdiensten umfasst, wobei der Empfänger umfasst:
einen mit einer Antenne koppelbaren Tuner zum Empfangen von Rundfunksignalen;
einen mit einem Ausgang des Tuners gekoppelten Demodulator zum Demodulieren eines empfangenen Rundfunksignals in eine Vielzahl von empfangenen Rahmen;
einen mit einem Ausgang des Demodulators gekoppelten Decodierer zum Decodieren der empfangenen Vielzahl von Rahmen; und
eine mit dem Tuner und dem Demodulator gekoppelte Steuerungseinrichtung, worin die Steuerungseinrichtung dafür konfiguriert ist:
den Tuner zu steuern, um ein erstes Rundfunksignal auf einer ersten Frequenz zu empfangen, sodass der Demodulator das erste empfangene Rundfunksignal demoduliert und der Decodierer aus einem ersten empfangenen Rahmen in dem ersten empfangenen Rundfunksignal ein MSC-Paket von Rundfunkdaten decodiert, das einem ersten Rundfunkdienst entspricht;
den Tuner zu steuern, um sich auf eine zweite Frequenz abzustimmen, die einem zweiten Rundfunksignal entspricht;
ein zweites Rundfunksignal auf der zweiten Frequenz zu ermitteln; und
den Tuner zu steuern, um sich wieder auf die erste Frequenz abzustimmen, sodass der Demodulator das erste empfangene Rundfunksignal demoduliert und der Decodierer aus einem zweiten empfangenen Rahmen in dem ersten empfangenen Rundfunksignal ein MSC-Paket von Rundfunkdaten decodiert, das dem ersten Rundfunkdienst entspricht, wobei der erste und der zweite empfangene Rahmen aufeinanderfolgende Rahmen in dem Rundfunksignal sind,
worin das Abstimmen des Tuners auf die zweite Frequenz, Ermitteln des zweiten Rundfunksignals und wieder Abstimmen des Tuners auf die erste Frequenz während des Empfangs eines Abschnitts des Rahmens erfolgt, der unerwünschten MSC-Paketen von Rundfunkdaten entspricht, die unerwünschten Rundfunkdiensten entsprechen, sodass es keine Unterbrechung des decodierten ersten Rundfunkdienstes gibt.

2. Empfänger nach Anspruch 1, worin die Steuerungseinrichtung dafür konfiguriert ist, während des ersten empfangenen Rahmens vor und/oder nach dem Empfangen des Pakets von Rundfunkdaten, das dem ersten Rundfunkdienst entspricht, den Tuner zu steuern, um sich auf eine zweite Frequenz abzustimmen, ein zweites Rundfunksignal zu ermitteln und den Tuner zu steuern, um sich wieder auf die erste Frequenz abzustimmen.

3. Empfänger nach Anspruch 1 oder 2, worin die Steuerungseinrichtung dafür konfiguriert ist, ein zweites Rundfunksignal durch Bestimmen des Vorhandenseins eines zweiten Rundfunksignals auf der zweiten Frequenz zu ermitteln.

4. Empfänger nach Anspruch 1, 2 oder 3, worin die Steuerungseinrichtung dafür konfiguriert ist, eine Qualitätsmetrik des zweiten Rundfunksignals zu bestimmen.

5. Empfänger nach einem der Ansprüche 1 bis 4, worin ein Paket von Rundfunkdaten codierte Audiodaten umfasst und worin der Decodierer dafür konfiguriert ist, die codierten Audiodaten in einen Audiostrom zum Ausgeben über einen Tonverstärker zu decodieren.

6. Empfänger nach einem der Ansprüche 1 bis 5, worin ein Paket von Rundfunkdaten codierte Programmdaten umfasst, die in einen Programmdatenstrom decodierbar sind.

7. Verfahren zum Ermitteln von Rundfunksignalen, wobei jedes der Rundfunksignale eine Vielzahl von DAB-Rahmen umfasst, wobei jeder Rahmen eine Vielzahl von Paketen von Rundfunkdaten umfasst, wobei jedes Paket von Rundfunkdaten einem Rundfunkdienst entspricht, worin jeder der Rahmen Pakete von Rundfunkdaten aus zwei oder mehr Rundfunkdiensten umfasst, wobei das Verfahren die Schritte umfasst:
Empfangen eines ersten Rundfunksignals auf einer ersten Frequenz unter Verwendung eines mit einer Antenne koppelbaren Tuners;
Demodulieren des ersten empfangenen Rundfunksignals;
Decodieren eines Pakets von Rundfunkdaten, das einem ersten Rundfunkdienst entspricht, aus einem ersten empfangenen Rahmen in dem ersten empfangenen Rundfunksignal;
Abstimmen des Tuners auf eine zweite Frequenz, die einem zweiten Rundfunksignal entspricht;
Ermitteln eines zweiten Rundfunksignals auf der zweiten Frequenz; und
wieder Abstimmen des Tuners auf die erste Frequenz und Empfangen, Demodulieren und Decodieren eines Pakets von Rundfunkdaten, das dem ersten Rundfunkdienst entspricht, aus einem zweiten empfangenen Rahmen in dem ersten empfangenen Rundfunksignal, wobei der erste und der zweite empfangene Rahmen aufeinanderfolgende Rahmen in dem Rundfunksignal sind,
worin das Abstimmen des Tuners auf die zweite Frequenz, Ermitteln des zweiten Rundfunksignals und wieder Abstimmen des Tuners auf die erste Frequenz während des Empfangs eines Abschnitts des Rahmens erfolgt, der unerwünschten Paketen von Rundfunkdaten entspricht, die unerwünschten Rundfunkdiensten entsprechen, sodass es keine Unterbrechung des decodierten ersten Rundfunkdienstes gibt.

8. Verfahren nach Anspruch 7, worin die Schritte des Steuerns des Tuners, um sich auf eine zweite Frequenz abzustimmen, des Ermittelns eines zweiten Rundfunksignals und des Steuerns des Tuners, um sich wieder auf die erste Frequenz abzustimmen, während des ersten empfangenen Rahmens vor und/oder nach dem Empfangen des Pakets von Rundfunkdaten, das dem ersten Rundfunkdienst entspricht, erfolgt.

9. Verfahren nach Anspruch 7 oder 8, worin das Ermitteln eines zweiten Rundfunksignals umfasst: Bestimmen des Vorhandenseins eines zweiten Rundfunksignals auf der zweiten Frequenz.

10. Verfahren nach Anspruch 7, 8 oder 9, worin das Ermitteln eines zweiten Rundfunksignals umfasst: Bestimmen einer Qualitätsmetrik des zweiten Rundfunksignals.

11. Verfahren nach einem der Ansprüche 7 bis 10, worin ein Paket von Rundfunkdaten codierte Audiodaten umfasst, die in einen Audiostrom zum Ausgeben über einen Tonverstärker decodierbar sind.

12. Verfahren nach einem der Ansprüche 7 bis 10, worin ein Paket von Rundfunkdaten codierte Programmdaten umfasst, die in einen Programmdatenstrom decodierbar sind.

## Revendications

1. Récepteur pour détecter des signaux de diffusion, chacun des signaux de diffusion comprenant une pluralité de trames DAB, chaque trame comprenant une pluralité de paquets de canal de service principal (MSC) de données de diffusion, chaque paquet MSC de données de diffusion correspondant à un service de diffusion, dans lequel chacune des trames comprend des paquets MSC de données de diffusion qui proviennent de deux services de diffusion ou plus, le récepteur comprenant :
un syntoniseur qui peut être couplé à une antenne pour recevoir des signaux de diffusion ;
un démodulateur qui est couplé à une sortie du syntoniseur pour démoduler un signal de diffusion reçu selon une pluralité de trames reçues ;
un décodeur qui est couplé à une sortie du démodulateur pour décoder la pluralité de trames reçues ; et
un contrôleur qui est couplé au syntoniseur et au démodulateur ;
dans lequel le contrôleur est configuré de manière à ce qu'il :
commande le syntoniseur pour qu'il reçoive un premier signal de diffusion à une première fréquence de telle sorte que le démodulateur démodule le premier signal de diffusion reçu et que le décodeur décode un paquet MSC de données de diffusion qui correspond à un premier service de diffusion à partir d'une première trame reçue dans le premier signal de diffusion reçu ;
commande le syntoniseur pour qu'il soit syntonisé sur une seconde fréquence qui correspond à un second signal de diffusion ;
détecte un second signal de diffusion à la seconde fréquence ; et
commande le syntoniseur pour qu'il soit rétro-syntonisé sur la première fréquence de telle sorte que le démodulateur démodule le premier signal de diffusion reçu et que le décodeur décode un paquet MSC de données de diffusion qui correspond au premier service de diffusion à partir d'une seconde trame reçue dans le premier signal de diffusion, les première et seconde trames reçues étant des trames consécutives dans le signal de diffusion ;
dans lequel la syntonisation du syntoniseur sur la seconde fréquence, la détection du second signal de diffusion et la rétro-syntonisation du syntoniseur sur la première fréquence sont effectuées pendant la réception d'une partie de la trame qui correspond à des paquets MSC non souhaités de données de diffusion qui correspondent à des services de diffusion non souhaités, de telle sorte qu'il n'y ait pas d'interruption du premier service de diffusion décodé.

2. Récepteur selon la revendication 1, dans lequel le contrôleur est configuré de manière à ce qu'il commande le syntoniseur de sorte qu'il soit syntonisé sur une seconde fréquence, de manière à ce qu'il détecte un second signal de diffusion et de manière à ce qu'il commande le syntoniseur de sorte qu'il soit rétro-syntonisé sur la première fréquence pendant la première trame reçue avant et/ou après la réception du paquet de données de diffusion qui correspond au premier service de diffusion.

3. Récepteur selon la revendication 1 ou 2, dans lequel le contrôleur est configuré de manière à ce qu'il détecte un second signal de diffusion en déterminant la présence d'un second signal de diffusion à la seconde fréquence.

4. Récepteur selon la revendication 1, 2 ou 3, dans lequel le contrôleur est configuré de manière à ce qu'il détermine une mesure de qualité du second signal de diffusion.

5. Récepteur selon l'une quelconque des revendications 1 à 4, dans lequel un paquet de données de diffusion comprend des données audio codées, et dans lequel le décodeur est configuré de manière à ce qu'il décode les données audio codées selon un flux audio pour une émission en sortie par l'intermédiaire d'un amplificateur audio.

6. Récepteur selon l'une quelconque des revendications 1 à 5, dans lequel un paquet de données de diffusion comprend des données de programme codées qui peuvent être décodées selon un flux de données de programme.

7. Procédé de détection de signaux de diffusion, chacun des signaux de diffusion comprenant une pluralité de trames DAB, chaque trame comprenant une pluralité de paquets de données de diffusion, chaque paquet de données de diffusion correspondant à un service de diffusion, dans lequel chacune des trames comprend des paquets de données de diffusion qui proviennent de deux services de diffusion ou plus, le procédé comprenant les étapes consistant à :
recevoir un premier signal de diffusion à une première fréquence en utilisant un syntoniseur qui peut être couplé à une antenne ;
démoduler le premier signal de diffusion reçu ;
décoder un paquet de données de diffusion qui correspond à un premier service de diffusion à partir d'une première trame reçue dans le premier signal de diffusion reçu ;
syntoniser le syntoniseur sur une seconde fréquence qui correspond à un second signal de diffusion ;
détecter un second signal de diffusion à la seconde fréquence ; et
rétro-syntoniser le syntoniseur sur la première fréquence et recevoir, démoduler et décoder un paquet de données de diffusion qui correspond au premier service de diffusion à partir d'une seconde trame reçue dans le premier signal de diffusion, les première et seconde trames reçues étant des trames consécutives dans le signal de diffusion ;
dans lequel la syntonisation du syntoniseur sur la seconde fréquence, la détection du second signal de diffusion et la rétro-syntonisation du syntoniseur sur la première fréquence sont effectuées pendant la réception d'une partie de la trame qui correspond à des paquets non souhaités de données de diffusion qui correspondent à des services de diffusion non souhaités, de telle sorte qu'il n'y ait pas d'interruption du premier service de diffusion décodé.

8. Procédé selon la revendication 7, dans lequel les étapes consistant à commander le syntoniseur de manière à ce qu'il soit syntonisé sur une seconde fréquence, à détecter un second signal de diffusion et à commander le syntoniseur de telle sorte qu'il soit rétro-syntonisé sur la première fréquence sont effectuées pendant la première trame reçue avant et/ou après la réception du paquet de données de diffusion qui correspond au premier service de diffusion.

9. Procédé selon la revendication 7 ou 8, dans lequel la détection d'un second signal de diffusion comprend la détermination de la présence d'un second signal de diffusion à la seconde fréquence.

10. Procédé selon la revendication 7, 8 ou 9, dans lequel la détection d'un second signal de diffusion comprend la détermination d'une mesure de qualité du second signal de diffusion.

11. Procédé selon l'une quelconque des revendications 7 à 10, dans lequel un paquet de données de diffusion comprend des données audio codées qui peuvent être décodées selon un flux audio pour une émission en sortie par l'intermédiaire d'un amplificateur audio.

12. Procédé selon l'une quelconque des revendications 7 à 11, dans lequel un paquet de données de diffusion comprend des données de programme codées qui peuvent être décodées selon un flux de données de programme.
